Europäisches Patentamt
European Patent Office
Office européen des brevets

(19)

(11) Publication number: 0 144 930 A2

(12) EUROPEAN PATENT APPLICATION

(21) Application number: 84114541.0

(22) Date of filing: 30.11.84

(51) Int. Cl.[4]: A 23 K 1/12
A 23 K 1/22, A 23 N 17/00

(30) Priority: 02.12.83 DK 5560/83

(43) Date of publication of application:
19.06.85 Bulletin 85/25

(84) Designated Contracting States:
AT BE CH DE FR GB IT LI LU NL SE

(71) Applicant: FMA Maskinfabriker A/S
Sanvedej 59 B
DK-4250 Fuglebjerg(DK)

(72) Inventor: Andersen, Tom Rudbeck
Tystrupvej 44
DK-4250 Fuglebjerg(DK)

(72) Inventor: Kromann, Karl Aksel
Chr. Winthersvej 87
DK-4700 Naestved(DK)

(74) Representative: Vossius Vossius Tauchner Heunemann Rauh
Siebertstrasse 4 P.O. Box 86 07 67
D-8000 München 86(DE)

(54) **Method and apparatus for treating cellulose-containing matter, e.g. straw, with gaseous ammonia.**

(57) In a method for treating cellulose-containing material, such as straw, by means of gaseous ammonia, which is produced on the site by heating an ammonium salt in the dry state, the ammonium salt used is a salt with an acid not leaving or forming noxious products in the material treated, and the gaseous ammonia and other products liberated by the heat are brought into contact with the material before substantial re-combination can take place. Preferred ammonium salts used are ammonium carbamate ($NH_2COONH_4$) and ammonium bicarbonate ($NH_4HCO_3$), giving off ammonia, carbon dioxide and steam. An apparatus for carrying out the method is described.

By means of the invention it is possible to treat cellulose-containing material, such as straw, grain, bagasse and even sawdust with a view to increasing their digestibility as animal feed, without having to use liquefied ammonia, and without having to remove the non-ammoniacal components of the decomposition products of the ammonium salt before bringing them into contact with the material to be treated.

EP 0 144 930 A2

'OSSIUS · VOSSIUS · TAUCHNER · HEUNEMANN · RAUH
PATENTANWÄLTE

SIEBERTSTRASSE 4 · 8000 MÜNCHEN 86 · PHONE: (089) 47 40 75
CABLE: BENZOLPATENT MÜNCHEN · TELEX 5-29 453 VOPAT D



Our Ref.: T 445 EP
Case: 325-23/TVR
FMA Maskinfabriker A/S
Fuglebjerg, Denmark

Nov. 30, 1984

METHOD AND APPARATUS FOR TREATING CELLULOSE-CONTAINING MATTER, E.G. STRAW, WITH GASEOUS AMMONIA.

The present invention relates to a method of treating cellulose-containing matter, such as straw, by bringing it into contact with gaseous ammonia, such as by passing the ammonia through it, said gaseous ammonia being produced on the site of processing by liberating gaseous ammonia salt in the dry state by heating.

It is known, e.g. from Danish Patent No. 145.051, that treating straw with gaseous ammonia causes a considerable increase in the animal feed value of the straw, and said Danish Patent No. 145.051 discloses a method and an apparatus for such treatment of straw in bales. A more recent development is the subject matter of GB 2.124.066 A. This more recent development is directed towards enabling the process to be carried out in locations where liquefied ammonia is not easily or economically available, e.g. due to a low level of infrastructural and/or technical development in the area concerned.

Said GB 2.124.066 A discloses a method, by which - according to the application's Claim 1 -

"the gaseous ammonia is produced on the site of processing by liberating gaseous ammonia from an ammonium-containing compound, such as ammonium hydroxide in aqueous solution or an ammonium salt in the dry state or in aqueous solution, e.g. by heating."

Thus, the method of the present invention is based upon one of the possible alternatives disclosed in said GB 2.124.066 A.

As is well known, there is a great number of ammonium salts, that give off gaseous ammonia by heating. In many cases, however, the chemical decomposition caused by the heating produces additional substances, usually in the form of fumes, gases or vapours, depending on the acid component of the particular salt, and these additional substances could be expected to compromise the suitability of the gaseous ammonia produced for use in treating straw or other cellulose-containing materials intended for use as animal feed.

It could also be expected that attempts at using either of these processes for generating gaseous ammonia for the purpose referred to above would fail due to the ammonia and the additional substances mentioned reacting with each other and the water - in the vapour state due to the heating - to re-form the ammonium salt, possibly within the material to be treated itself, rendering the material more or less uneatable for animals, and most likely not producing the desired effect of bringing the material into contact with gaseous ammonia for a sufficiently long period of time to ensure that the feed value of the material is increased.

The present invention is, however, based on the unexpected

recognition that such re-combination of the consituents of the salt does not in fact take place immediately. Thus, the method according to the invention is characterised in that the ammonium salt used is an ammonium salt of an acid of a kind not leaving or forming noxious products in said material, and that the mixture of gaseous ammonia, any other gaseous substance and water produced by heating said ammonium salt is brought into contact with said cellulose-containing matter before substantial re-combination has occurred.

There are many acids that fulfil the conditions set forth above, but at the present time the ammonium salts of these acids that could include both inorganic and organic acids, such as acetic acid, citric acid and tartaric acid to name only three of many, are too expensive to justify their use in the process herein referred to.

There are, however, two well-known acids, that fulfil the conditions set forth above and form ammonium salts that at the present time are sufficiently cheap to be considered for use in the process herein referred to, and these acids are carbamic acid ($NH_2COOH$) and carbonic acid ($H_2CO_3$). Thus, a preferred embodiment of the method according to the invention is characterised in that the ammonium salt is ammonium carbamate ($NH_2COONH_4$) or ammonium bicarbonate ($NH_4HCO_3$). It is known that ammonium carbonate as distinct from ammonium bicarbonate is not stable under normal conditions, as attempts at producing a salt with the formula $(NH_4)_2CO_3$ normally lead to the formation of $NH_2COONH_4$, i.e. ammonium carbamate, the ammonium salt of carbamic acid.

When heated, these salts decompose, forming gaseous ammonia, gaseous carbon dioxide and water vapour, thus:

$$NH_2COONH_4 \rightarrow 2NH_3 + CO_2 + H_2O, \quad \text{or}$$

$$NH_4HCO_3 \rightarrow NH_3 + CO_2 + H_2O.$$

Practical trials using ammonium bicarbonate have shown that substantial re-combination of the consituents so formed does not appear to take place to any significant degree, as the material treated exhibited a considerable increase in animal feed value, measured as the percentage of enzymatically digestible organic dry matter, which increase is of the same order of magnitude as the increase obtained by using pure ammonia. Similar results can naturally be expected by using ammonium carbamate, as the decomposition products are the same, only differing in their mutual proportions.

According to a first embodiment of the method of the invention, then, the method is characterized in that the ammonium salt used is ammonium carbamate or ammonium bicarbonate.

In this connection it should be noted that it is known to increase the digestibility of straw pellets by adding ammonium bicarbonate to the comminuted straw before pressing it in a pelletizing press, cf. the article by H. Bergner "Chemische Grundlagen des Strohaufschlusses in der Pelletierpresse", Arch. Tierernährung, Berlin, 1980, Bd. 30, H.1/2/3, p.239-256. The process so disclosed is, however, obviously not suited for the purpose of the method according to the invention for treating whole straw as distinct form comminuted straw, and from p. 251, second paragraph, it appears that a lasting effect is not obtained, as after prolonged storage "the increased digestibility of the organic matter in the straw pellets is no longer detectable".

In order to reduce the probability of re-combination of the decomposition products before effective treatment of the cellulose-containing matter has had time to take place, is it preferred according to a second embodiment of the invention that the heating of the ammonium salt is carried out in a location very close to the cellulose--containing matter to be treated, and that the constituents liberated by heating are transported or allowed to move substantially directly towards and through said matter.

If said location - according to a third embodiment - is below the cellulose-containing matter, then the circulation of the decomposition products including the ammonia will be assisted by thermal convection.

A fourth embodiment of the method according to the invention is characterized in that the process is carried out in a substantially closed space containing both the cellulose-containing matter to be treated and the ammonium salt, and that the heating is carried out by heating air and/or other gases or vapours circulating in said space by thermal convection and/or mechanical circulation, so that heat is transmitted to both the cellulose-containing matter and the ammonium salt by the circulating medium or media. This enables the process to be carried out by using equipment already existing, such as the apparatus described in the above Danish Patent No. 145.051 or the above GB 2.124.066 A.after a slight modification, if necessary.

The invention also relates to an apparatus for carrying out the method according to the invention, and this apparatus is characterized by

a) a substantially closed space,
b) means for supporting said cellulose-containing matter within said substantially closed space,
c) means for supporting said ammonium salt within said substantially closed space, and
d) means for supplying heat to said apparatus in such a manner that at least said ammonium salt is heated.

In a preferred embodiment of this apparatus the arrangement is such that the heat is also supplied to the cellulose-containing matter being treated, as this naturally increases the speed of the reaction taking place between the gaseous ammonia and the cellulose-containing matter.

This can be attained by using a preferred arrangement, comprising
a) means to circulate air and/or other gases or vapours through said closed space, and
b) means to supply heat to the medium or media thus circulated.

As mentioned above, the method according to the invention may be carried out by using equipment of the kind described in the above Danish Patent No. 145.051 or the above GB 2.124.066 A. with slight modifications, if required. Both of the respective specifications describe apparatus comprising at least
i) a substantially closed space, i.e. closed except for entry and exit conduits, the requisite over- and underpressure relief valves, etc.,
ii) means for supporting a cellulose-containing material within the substantially closed space,
iii) means for circulating air and/or other gaseous media within said substantially closed space, and
iv) means for supplying heat to the medium or media thus circulated.

The only addition required to enable this known apparatus to be used for carrying out the method of the present invention would thus be

v) means for supporting an ammonium salt within said substantially closed space.

Other apparatus that could be used for carrying out the method according to the present invention could, of course, be designed by persons skilled in the art without further guidance.

An example of how the method according to the present invention may be carried out is described in the following.

EXAMPLE

A bale of barley straw weighing 208 kilogrammes was placed in a substantially closed treatment chamber immediately above a portion of ammonium bicarbonate ($NH_4HCO_3$) weighing 31 kilogrammes. The air in the chamber was made to circulate by using a blower, and at the same time heated by means of a heating element, so that the hot air supplied heat both to the straw and to the ammonium bicarbonate. The heating was continued for a period of approximately 14 hours, an equilibrium temperature being reached at approximately 95°C in the circulating medium and approximately 85°C in the straw (the difference probably being due to the straw's moisture content evaporating slowly). During this period the ammonium bicarbonate decomposed into gaseous components, that were brought into contact with the straw by the circulation caused by the blower, any surplus air or other gaseous substances escaping through a relief valve.

Next, the circulation was stopped, and the system allowed to complete any reactions for a period of 4 hours, and after 5 additional hours of "airing", the straw was removed from the chamber.

The following results were obtained by analysing the straw before and after treatment:

| | Before | After |
|---|---|---|
| Enzymatically digestible organic dry matter | 29.5% | 42.9% |
| Nitrogen | 0.49% | 1.18% |

These results may be compared with the results reported

in the above Danish Patent No. 145.051 (relating to straw of an unspecified species):

| | Before | After |
|---|---|---|
| Enzymatically digestible organic dry matter | 26.8% | 51.0% |
| Nitrogen | 0.64% | 1.26% |

The percentage increase in enzymatically digestible organic dry matter is thus for the above example of the method according to the invention

$$\frac{42.9 - 29.5}{29.5} \times 100\% = 45.4\%,$$

whereas the corresponding value for the results reported in the Danish Patent No. 145.051 is

$$\frac{51.0 - 26.8}{26.8} \times 100\% = 90.2\%.$$

It cannot be denied that the above example appears to give inferior results as compared with the results previously reported, but it should be borne in mind

a) that the above example represents a "first try", for which reason considerable improvements are to be expected following practical refinements of the process,

b) that the raw materials used may differ from each other, as the earlier report does not state the type of straw, and

c) - not least - that the method according to the invention makes it possible in a new and unexpected

manner to effect a treatment of cellulose-containing matter of the kind referred to without using liquefied ammonia.

The method according to the present invention is not limited to the treatment of straw, but may be applied to any cellulose-containing material, in which the cellulose component may be modified by ammonia with a view to improving its digestibility. Thus, the method of the invention may also be applied to the treatment of grain, bagasse and even wood in the form of sawdust. Obviously, the various processing parameters may have to be adapted to the particular material being treated.

# C L A I M S

1. A method of treating cellulose-containing matter, such as straw, by bringing it into contact with gaseous ammonia, such as by passing the ammonia through it, said gaseous ammonia being produced on the site of processing by liberating gaseous ammonia from an ammonium salt in the dry state by heating, c h a r a c t e r i z e d in that the ammonium salt used is an ammonium salt of an acid of a kind not leaving or forming noxious products in said material, and that the mixture of gaseous ammonia, any other gaseous substance and water vapour produced by heating said ammonium salt is brought into contact with said cellulose-containing matter before substantial re-combination has occurred.

2. A method according to claim 1, c h a r a c - t e r i z e d in that the ammonium salt used is ammonium carbamate or ammonium bicarbonate.

3. A method according to claim 1 or claim 2, c h a - r a c t e r i z e d in that the heating of the ammonium salt is carried out in a location very close to the cellulose-containing matter to be treated, and that the constituents liberated by the heating are transported or allowed to move substantially directly towards and through said matter.

4. A method according to claim 2 or claim 3, c h a - r a c t e r i z e d in that said location is below said matter.

5. A method according to one or more of the claims 1-4, c h a r a c t e r i z e d in that the process is carried out in a substantially closed space containing

both the cellulose-containing matter to be treated and the ammonium salt, and that the heating is carried out by heating air and/or other gases or vapours circulating in said space by thermal convection and/or mechanical circulation, so that heat is transmitted to both the cellulose-containing matter and the ammonium salt by the circulating medium or media.

6. A method according to one or more of the claims 1-5, characterized in that at least part of the requisite amount of ammonium salt is admixed to the cellulose-containing matter prior to the heating step.

7. An apparatus for treating cellulose-containing matter by carrying out the method according to one or more of the claims 1-6, characterized by

a) a substantially closed space,
b) means for supporting said cellulose-containing matter within said substantially closed space,
c) means for supporting said ammonium salt within said substantially closed space, and
d) means for supplying heat to said apparatus in such a manner that at least said ammonium salt is heated.

8. An apparatus according to claim 7, characterized by such an arrangement that said heat is also supplied to said cellulose-containing matter.

9. An apparatus according to claim 8, characterized by

a) means to circulate air and/or other gases or vapours through said closed space, and
b) means to supply heat to the medium or media thus circulated.